# EUROPEAN PATENT APPLICATION

(11) **EP 0 749 692 A2**
(43) Date of publication of application: **27.12.1996**
(21) Application number: 96201672.1
(22) Date of filing: 14.06.1996
(51) Int. Cl.: A23B 7/148

(54) **Method and apparatus for controlling the atmosphere in a gas filled closable space**

(30) Priority: 19.06.1995 NL 1000594
(71) Applicant: Pebaco B.V., 3295 XB 's-Gravendeel (NL)
(72) Inventor: Kooijman, Peter Anthon Cornelis, 2954 BM Alblasserdam (NL)
(74) Representative: Bartelds, Erik

(57) **Abstract**

The invention relates to a method for controlling the atmosphere in a gas filled closable space, comprising periodically monitoring the composition of the atmosphere in the space and with the aid of the space monitoring, supplying a determined amount of supply gas with a determined, established composition and discharging from the space a determined part of the gas present in the space. At least part of the gas discharged from the space is supplemented by admixing a supplemental gas, and the mixture thus formed is subjected to a cleaning processing in order to change the composition thereof, and is subsequently guided back to the space, in such a way that the total amount of supply gas supplied to the space per unit time substantially corresponds to the total amount of discharged gas withdrawn therefrom per unit time.

The invention further relates to an apparatus for carrying out this method.

## Description

The invention relates to a method for controlling the atmosphere in a gas filled closable space, comprising periodically monitoring the composition of the atmosphere in the space and with the aid of the space monitoring, supplying a determined amount of supply gas with a determined, established composition and discharging from the space a determined part of the gas present in the space. Such an apparatus is known and is for example used for the long term storage, under accurately regulated conditions, of food products such as agricultural products for example.

There are many agricultural products, such as fruit for example, of which the harvest is related to a season but of which due to price consideration it is desirable that these can be sold substantially throughout the whole year. Hence it is very important that such products can be stored for long periods in such a way that the quality thereof does not or hardly deteriorate. Accordingly such products are kept in storage spaces wherein an accurately regulated atmosphere exists. For example it is known of fruit that this can be kept during an extended period at a low temperature in an atmosphere with a low oxygen content and an increased carbon dioxide content. In that way the "breathing" of the fruit is strongly inhibited, whereby the riping process is almost brought to a stand still. Since the breathing activity of fruit does not directly proportionally vary with the oxygen content of the atmosphere wherein the fruit is kept, it has been established that in order to provide good storage, the oxygen content should not only be low, but in actual fact must be very low. In this instance an oxygen content of 1 to 1.2 % is thought of wherein one then speaks of a so-called ULO (Ultra Low Oxygen) storage.

Accordingly for this storage it is very important that the atmosphere with a low oxygen content is brought about relatively quickly, after the agricultural products have been placed in the storage room, and that this very low oxygen content is constantly maintained and is relatively quickly recovered in case of disturbances. Under disturbances can one think of for example opening of the storage space, for example for controlling the quality of the products kept there within, arranging new products in the space, or removing an amount of the products kept there within or for example carrying out maintenance work in the space. With such disturbances, the storage space is opened, whereby ambient air with, as is known, an oxygen content of roughly 21 % can stream into the space whereby the average oxygen content in the storage space relatively quickly increases. The oxygen content can also vary as a consequence of the weather, especially the air pressure of the atmosphere around the storage space and as a consequence of leaks in the storage space construction.

Although as a consequence of the breathing activity of the agricultural products the oxygen content in the storage space is spontaneously lowered, an accelerated lowering is better in order to guarantee a good shelf life. Due to the breathing, the oxygen content in the space will initially decrease by roughly 1 % per day decrease. The more the oxygen content decreases however, the more the breathing activity of the agricultural products decreases, whereby a further lowering of the oxygen content requires increasingly more time. Hence in order to relatively quickly provide and to keep an atmosphere with a very low oxygen content, recourse is generally had to aids, for example in the form of a so-called nitrogen generator which is connected to the storage space. Such nitrogen generators are commercially available in many different embodiments, but they all work on the general principle that a part of the components of a gas forming a mixture of nitrogen and other components such as for example oxygen, and being guided through the nitrogen generator, are withdrawn, whereby the nitrogen content of the gas at the outlet of the nitrogen generator is higher than at the inlet thereof. Use is generally made of ambient air as gas which is led through the nitrogen generator, wherein roughly 21 % oxygen is present.

A disadvantage of this known method is that as a consequence of the high oxygen content of the ambient air, the nitrogen generator should be relatively high-powered in order to decrease the oxygen content to 0.9-2 % for example, which is required for ULO storage.

The invention therefore aims to provide a method of the above described sort, which requires less power. This is achieved by the invention through the fact that at least part of the gas discharged from the space is supplemented by admixing a supplementary gas wherein the so formed mixture is subjected to a cleaning processing in order to change the composition thereof and is subsequently recirculated into the space in such a way that the total amount of supply gas supplied per unit time to the space substantially corresponds with the total amount of gas discharged therefrom per unit time. By taking a part of the gas originating from the space as start gas, the composition of which already resembles the desired composition more closely, the cleaning processing, for example for lowering the oxygen content, requires relatively less power in comparison with the known methods. Moreover by adjusting the amounts of gas which flow to and from the space with respect to each other, an excessive variation of the pressure in the space is prevented.

Preferably applied variants of the method according to the invention form the subject matter of the dependent claims 2-5.

The invention also relates to an apparatus for carrying out the above described method which apparatus is provided with means for supplying the space with a determined amount of supply gas of a determined, established composition, means for discharging from the space a determined part of the gas present in the space, and control and monitoring means. According to the invention such an apparatus is characterized by first means for measuring the amount of gas supplied per unit time to the space, second means for measuring the gas discharged per unit time from the space, means arranged between the gas discharge means and the gas supply means for cleaning and for making suitable for recirculation at least part of the gas withdrawn from the space and controllable means for admixing the supplementary gas, connected to the gas discharge means and arranged upstream from the cleaning means.

Preferred embodiments of the apparatus according to the invention are described in the dependent claims.

The invention will now be described with respect to a number of examples wherein reference is made to the accompanying drawings, in which corresponding components are designated to with the same reference numbers and wherein:
Figure 1 shows a principle scheme of an apparatus according to a first embodiment of the invention;
Figure 2 shows a principle scheme of an apparatus according to a second embodiment of the invention;
Figure 3 shows a principle scheme of an apparatus according to a third embodiment of the invention;
Figure 4 schematically shows a test arrangement for measuring the workability of the apparatus according to the invention; and
Figure 5 shows a diagram wherein results of the tests in the arrangements of figure 4 are represented.

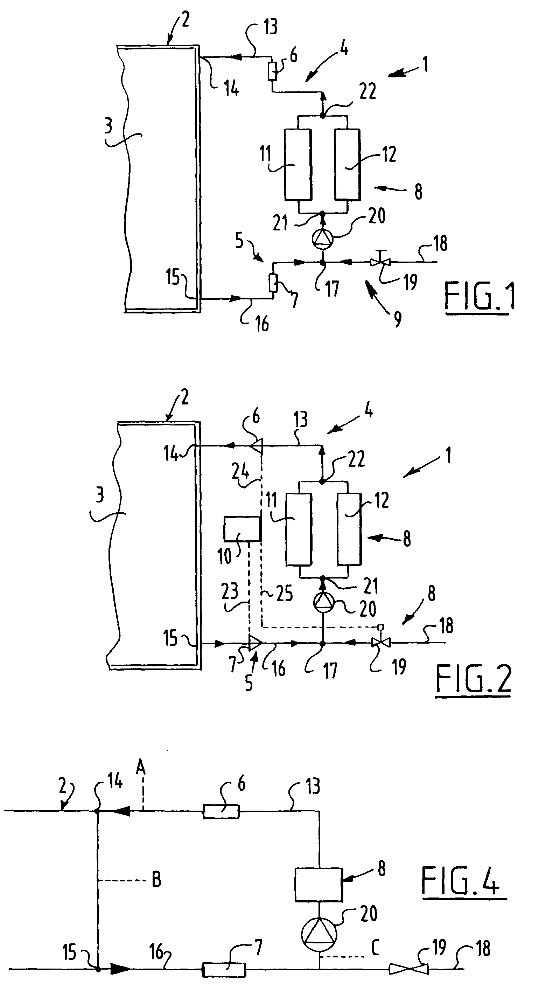

An apparatus 1 for controlling the atmosphere in the interior 3 of an isolatable space 2 (figure 1) filled with gas contains (here not shown) means for monitoring the composition of the atmosphere in the space, means 4, joined to an inlet 14 of the space for supplying supply gas with a determined, established composition to the space 2, and means connected with a discharge point 15 of the space 2 for discharging therefrom of a determined part of the gas present in the space 2. The gas supply means comprise a gas supply conduit 13 wherein a measuring unit 6 is mounted for measuring the amount of gas supplied to the space 2 per unit time. The gas discharge means 5 comprise a conduit 16 wherein a measuring unit 7 is also mounted for measuring the gas discharged from the space 2 per unit time. The gas discharge means 5 and the gas supply means 4 are connected to each other under interposition of means 8 for cleaning and for rendering suitable for recirculation to the space of gas withdrawn from the space 2 or at least of a part thereof. The gas supply means 4 and the gas discharge means 5 are controllable, for example by means of valves (not shown) arranged in the gas supply and discharge pipes 13, 16 whereby the gas streams to and from the space 2 can be controlled for example with the aid of information concerning the composition of the atmosphere in the space 2 which is provided by the composition monitoring means or with the aid of a pre-established program.

The cleaning means 8 are formed by two parallel connected nitrogen generators 11, 12. These nitrogen generators are for example so-called PSA generators having a molecular sieve, formed by a specific sort of active carbon, wherethrough a gas consisting of nitrogen and other components can be guided. Components such as oxygen for example remain behind in the sieve, whereby the nitrogen content of the gas at the outlet of the nitrogen generator 11, 12 is higher than at the inlet. When the molecular sieve is saturated, and its working thereby decreases, the nitrogen generator 11, 12 is regenerated by reversal of the flow direction therein.

Since a part of the gas guided through the nitrogen generator 11, 12 remains behind in the sieve, the volume flow to the outlet thereof is smaller than to the inlet. Accordingly not only the gas withdrawn from the space 2 by means of the gas discharge means 5, but also a determined part of a supplementary gas, for example ambient air, is guided through the nitrogen generators 11, 12, in order to ensure that the flow of cleaned oxygen-poor gas available at the outlet of the nitrogen generators 11, 12 for supply to the space 2 substantially corresponds to the flow withdrawn from the space 2. For this purpose means 9 connected to the gas discharge means 5 are arranged upstream from the cleaning means 8 for admixing a determined amount of ambient air to gas discharge from the space 2. The admixing means 9 comprise a conduit 18 connected with a suction opening for the ambient air, in which conduit 18 a controllable valve 19 is mounted and which comes together at a connecting point 17 with the gas discharge conduit 16.

From this connecting point 17 the mixture of gas withdrawn from the space 2 and ambient air is guided through a fan or compressor 20 via a three way valve 21, to the nitrogen generator 11 which is in use at that moment. The nitrogen generator 12 or 11 which is not in use can be simultaneously regenerated. In the nitrogen generator 11 or 12 oxygen is withdrawn from the mixture of relatively low-oxygen gas withdrawn from the space 2 and the relatively high-oxygen ambient air, whereby the mixture leaves the nitrogen generator being relatively poor in oxygen and flows via a three way valve 22 to the gas supply conduit 13. Since a mixture of relatively low-oxygen gas from the space 2 and ambient air is supplied to the nitrogen generator 11 or 12 instead of pure ambient air such as by conventional systems of this sort, a nitrogen generator with less capacity than generators which make no use of such a mixing system is sufficient, or alternatively when a conventional nitrogen generator is used the composition of the atmosphere in an space can be more quickly adjusted then previously was the case. The extent to which ambient air is admixed is controllable by means of the valve 19 which is sufficiently opened that the gas supply flow detected by the first measurement means 6 substantially corresponds with the gas discharge flow detected by the second measuring means 7.

The apparatus as here above described can also be automated. For this purpose control means 10 may be present for example in the form of a programmable logic control circuit (PLC) which via lines 24, 23 respectively is controllably connected with the first and second measuring means 6, 7 and is controllingly connected via a line 25 with the admixing means 9 (figure 2). These control means 10 ensure that by regulating in the correct manner the opening of the valve 19 as much ambient air is mixed with the discharge gas that the gas flow supplied to the space 2 per unit time substantially corresponds with the gas flow withdrawn from the space 2. The control means 10 can also be controllably connected with the means for monitoring the composition of the atmosphere in the space and controllingly connected with valves in the gas supply conduit 13 and the gas discharge conduit 16. In such a way, it can be arranged by the control means 10 that the supply of cleansed gas and withdrawal of supply gas from the space 2 is automatically started when the composition of the atmosphere changes such that for example the oxygen content thereof exceeds a particular threshold value.

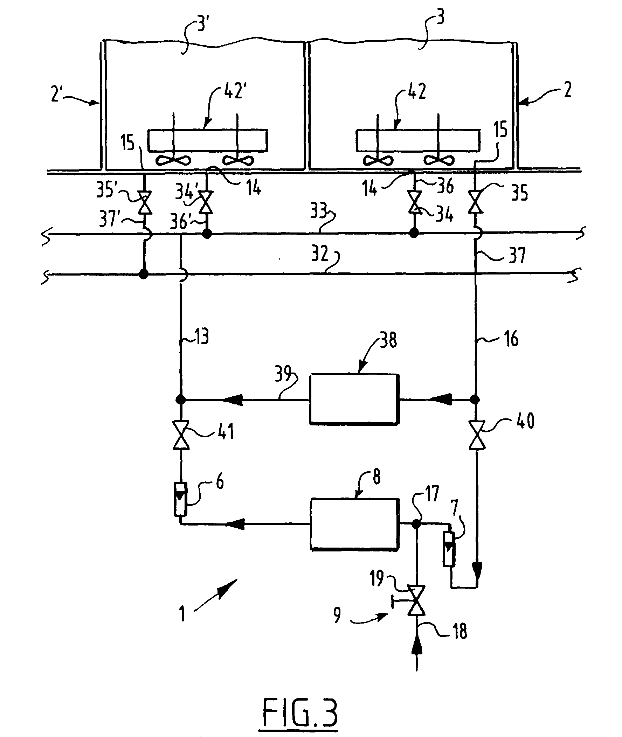

The illustrated apparatus can furthermore be used for controlling the composition of the atmosphere in a plurality of spaces 2, 2', ... (figure 3). For this purpose the gas supply and gas discharge conduits 13, 16 are joined with collecting conduits 32, 33 which lead to the spaces 3, 3' via side conduits 36, 36', .. and 37, 37', .. . In the side conduits 36, 36', .. and 37, 37', .. valves 34, 34', .. and 35, 35', .. are arranged which under control of the controlling means 10 can be opened and closed one after another, whereby the associated space 2, 2', .. can be connected with the apparatus. In this embodiment of the apparatus 1, a second cleaning installation 38 is also present for example in the form of a CO₂ scrubber. This CO₂ scrubber 38 is also connected via a parallel conduit 39 with the gas discharge conduit 16 and the gas supply conduit 13. By opening or closing the controllable valves 40, 41, the CO₂ scrubber 38 or the nitrogen generator 8 can be selectively connected with the spaces 2, 2', .. . In the spaces 2, 2', .. cooling units 42, 42', .. are also mounted.

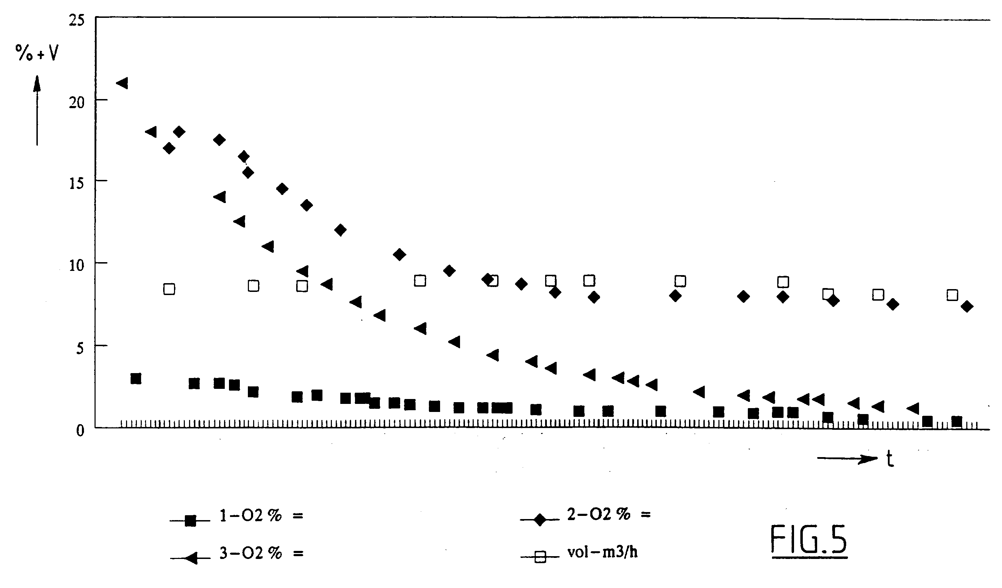

The working of the method and apparatus according to the present invention have been tested in an arrangement as shown in figure 4. For this purpose the oxygen content of gas flowing across, or respectively being present at three points A, B, C was measured. The measurements were periodically repeated during approximately three hours. The extent of mixture of ambient air was chosen so that during the whole measuring period a gas flow of approximately 9 m³/hour circulated. The results of the tests are shown in figure 5, where along the vertical axis 26 both the measured volume of the gas flow and the oxygen content in per cent along the differing measuring points is illustrated, whilst the horizontal axis 27 shows the time scale. It is clear that the oxygen content in the gas supply conduit 13, measured at point A and illustrated in the figure by blocks 28, gradually decreases from an initial value of roughly 3 % and asymptotically approaches a desired value of roughly 0.5 %. The oxygen content in the space 2 decreases thereby from 21 % (ambient air) to a value of 1.2 % after approximately 3 hours (illustrated by the triangles 29). In the same period the oxygen content at the inlet of the cleaning means 8 falls asymptotically back to a value of roughly 7.5 %. It is therefore clear to see that by guiding gas withdrawn from the space 2 and already having a relatively low oxygen content through the cleaning installation 8, the efficiency of the cleaning installation is greatly improved in comparison with the situation wherein only ambient air is guided through the cleaning installation. In this way the atmosphere in the space 2 can be brought more quickly to a desired composition than previously, without the need for installing a larger nitrogen generator or alternatively a smaller generator is sufficient for adjusting the atmosphere. Furthermore by keeping in equilibrium the gas flows supplied and withdrawn from the space, it can be ensured that substantially no pressure differences occur in the space.

Although the invention has been described above in relation to the application for maintaining a low-oxygen atmosphere, the invention can also be used in order to adjust and/or to maintain an other desired composition of the atmosphere in the space.

## Claims

1. Method for controlling the atmosphere in a gas filled, closable space (2) comprising periodically monitoring the composition of the atmosphere in the space (2) and with the aid of the space (2) monitoring, supplying a determined amount of supply gas with a determined, established composition and discharging from the space (2) a determined part of the gas present in the space, **characterized in that** at least part of the gas discharged from the space (2) is supplemented by admixing a supplementary gas wherein the so formed mixture is subjected to a cleaning processing in order to change the composition thereof and is subsequently recirculated into the space (2) in such a way that the total amount of supply gas supplied per unit time to the space (2) substantially corresponds with the total amount of gas discharged therefrom per unit time.

2. Method according to claim 1, **characterized in that** all the gas discharged from the space (2) is cleaned and recirculated.

3. Method according to claims 1 or 2, **characterized in that** the cleaning processing comprises lowering the oxygen content of the gas.

4. Method according to any of the previous claims, **characterized in that** ambient air is drawn in as supplementary gas.

5. Method according to one of the previous claims **characterized in that** the supply and discharge of gas to and from the space occurs periodically according to a determined, adjusted program.

6. Apparatus (1) for regulating the atmosphere in a gas filled isolatable space (2), provided with means (4) for supplying the space (2) with a determined amount of supply gas of a determined, established composition, means (5) for discharging from the space a determined part of the gas present in the space (2), and control and monitoring means, **characterized by** first means (6) for measuring the amount of gas supplied per unit time to the space (2), second means (7) for measuring the gas discharged per unit time from the space (2), means (8) arranged between the gas discharge means (5) and the gas supply means (4) for cleaning and for making suitable for recirculation at least part of the gas withdrawn from the space (2) and controllable means (9) for admixing the supplementary gas, connected to the gas discharge means (5) and arranged upstream from the cleaning means (8).

7. Apparatus (1) according to claim 6, **characterized in that** the gas supply means (4) and the gas discharge means (5) are controllable.

8. Apparatus (1) according to claim 7, **characterized in that** the control and monitoring means are controllingly connected with the gas supply means (4), the gas discharge means (5) and the admixing means (9) and controllably connected with the first and second measuring means (6 and 7) and are arranged for controlling the gas supply, gas discharge and admixing means (4, 5, 9) in such a way that the supplied amount of gas per unit time to the space (2) substantially corresponds with the amount discharged therefrom per unit time.

9. Apparatus according to any of the claims 6 to 8, **characterized in that** the control and monitoring means are controllably connected with means for observing the composition of the atmosphere in the space (2).

10. Apparatus according to one of the claims 6 to 8, **characterized in that** the control and signalling means are programmable, and arranged for completing a determined, established control program.

11. Apparatus (1) according to any of the claims 6-10, **characterized in that** the cleaning means (8) are arranged for lowering the oxygen content of the gas guided therethrough.

12. Apparatus (1) according to one of the claims 6-11 characterized in that the cleaning means (8) comprise at least one nitrogen generator (11, 12).

13. Apparatus according to one of the claims 6-12, **characterized in that** the gas supply means (4) and the gas discharge means (5) each comprise at least one collection conduit (32, 33) connecting the cleaning means (8) with a plurality of spaces (2).
